# FASCICULE DE BREVET EUROPEEN

(11) **EP 1 301 269 B1**
(45) Date de publication et mention de la délivrance du brevet: **22.12.2004**
(21) Numéro de dépôt: 01954090.5
(22) Date de dépôt: 12.07.2001
(51) Int. Cl.: B01J 19/00, B41J 2/14, B41J 2/16, B01L 3/02

(54) **TETE D'INJECTION ET DE DOSAGE THERMIQUE, SON PROCEDE DE FABRICATION ET SYSTEME DE FONCTIONNALISATION OU D'ADRESSAGE LA COMPRENANT**
THERMISCHER INJEKTIONS- UND DOSIERKOPF, VERFAHREN ZU SEINER HERSTELLUNG SOWIE FUNKTIONALISIERUNGS- ODER ADRESSIERUNGSSYSTEM MIT EINEM SOLCHEM KOPF
THERMAL INJECTION AND PROPORTIONING HEAD, METHOD FOR MAKING SAME AND FUNCTIONALISING OR ADDRESSING SYSTEM COMPRISING SAME

(30) Priorité: 13.07.2000 FR 0009195
(43) Date de publication de la demande: 16.04.2003
(73) Titulaire: CENTRE NATIONAL DE LA RECHERCHE SCIENTIFIQUE (CNRS), 75794 Paris Cedex 16 (FR)
(72) Inventeur: GUE, Anne-Marie, F-31320 Rebigue (FR); ESTEVE, Daniel, F-31520 Ramonville St-Agne (FR); CONEDERA, Véronique, F-31300 Toulouse (FR); FABRE, Norbert, F-81500 Lavaur (FR)
(74) Mandataire: Audier, Philippe André
(86) Numéro de dépôt international: PCT/FR2001/002274
(87) Numéro de publication internationale: WO 2002/005946

(56) Documents cités:
- EP-A- 0 764 533
- US-A- 4 894 664
- US-A- 5 831 070
- US-A- 5 980 719
- US-A- 6 039 438

## Description

L'invention concerne une tête d'injection et de dosage thermique, plus précisément une tête d'injection et de dosage thermique comprenant au moins un dispositif d'injection et de dosage thermique à buse pour fournir, délivrer une quantité déterminée de liquide.

L'invention concerne, en outre, un procédé de fabrication d'une telle tête.

L'invention a trait enfin à un système de fonctionnalisation ou d'adressage comprenant une telle tête, en particulier, pour des microréacteurs biologiques ou chimiques.

L'invention se situe, de manière générale, dans le domaine des dispositifs permettant de déposer sur un substrat ou d'apporter, d'injecter, dans des microréservoirs, une pluralité de microgouttes de liquide de volume déterminé.
De telles gouttes de liquide peuvent, par exemple, être des solutions d'ADN ou des réactifs d'immunologie, qui forment ainsi des rangées ou matrices miniaturisées de gouttes ou de réservoirs d'essais, qui sont utilisés, en particulier, dans les analyses médicales.

On sait, en effet, que les biopuces, par exemple, sont des dispositifs qui permettent de réaliser un très grand nombre de bioanalyses en parallèle. Le principe est de réaliser sous une forme miniaturisée des matrices de microréservoirs d'essais.

Chaque point d'essai est spécifique et résulte du mélange ou de l'association d'éléments chimiques et biochimiques précis. Ces mélanges ou associations peuvent être réalisés par divers procédés qui peuvent être cependant classés en deux grandes catégories.

Dans la première catégorie de ces procédés, dits de fonctionnalisation des biopuces, on applique un à un les constituants et on contrôle les réactions par adressage sur les microréservoirs visés d'une action facilitant ou inhibant la réaction.

Dans la seconde catégorie de procédé de fonctionnalisation des biopuces, on apporte mécaniquement, point par point, les constituants spécifiques dans le microréservoir visé ; cette dernière catégorie se rapproche du domaine de l'invention.

Les procédés de fonctionnalisation de biopuces se divisent entre, d'une part, les procédés, dits « in situ », et, d'autre part, les procédés, dits « ex situ ».

Le principal procédé de synthèse in situ, c'est-à-dire où la synthèse, par exemple, du brin d'ADN, se fait directement sur la puce, sur support solide, est celui de AFFIMETRIX®. Ce procédé repose sur la synthèse in situ, c'est-à-dire directement sur la puce, d'oligonucléotides, par exemple de brins d'ADN, avec des méthodes empruntées à la photolithographie. Les surfaces des unités d'hybridation (UH), modifiées par un groupe protecteur photolabile, sont éclairées à travers un masque photolithographique. Les UH ainsi exposées au rayonnement lumineux, sont sélectivement déprotégées et peuvent donc être ensuite couplées à l'acide nucléique suivant. Les cycles de déprotection et couplage sont répétés jusqu'à ce que l'ensemble des oligonucléotides désirés soit obtenu.

D'autres procédés EX SITU ont déjà été expérimentés en utilisant les capacités microélectroniques du silicium. La puce comprend plusieurs électrodes microélectroniques de platine, disposées au fond de cuvettes usinées dans du silicium et adressées individuellement. Les sondes, telles que des oligonucléotides ou des brins d'ADN sont couplés à un groupement pyrrole et sont dirigés par un champ électrique sur l'électrode activée, où s'effectue la copolymérisation en présence de pyrrole libre, on obtient ainsi un accrochage électrochimique des sondes.

A la lumière de ce qui précède, il apparaît que les procédés de synthèse in situ, tels que celui d'AFFIMETRIX®, permettent d'atteindre des densités élevées d'unités d'hybridation et utilisent des techniques parfaitement maîtrisées, compatibles avec des supports silicium. Leurs inconvénients majeurs sont leur coût élevé, qui exclut leur utilisation par de petites entités, comme les laboratoires de recherche ou d'analyses médicales et le fait que le faible rendement de la réaction de photodétection implique beaucoup de redondance dans les séquences présentes sur la puce.

La réalisation est relativement lourde à cause, notamment, des masques photolithographiques et est donc adaptée surtout à des objectifs ciblés avec des volumes d'utilisation importants.

Dans les procédés, dits « ex situ », c'est-à-dire où la synthèse du brin d'ADN se fait ex situ, chaque séquence doit être pré-synthétisée indépendamment des autres, puis reportée sur le support. La procédure est longue et exclut la réalisation d'un grand nombre de séquences différentes sur une même puce. Les puces réalisées ainsi seront donc des puces de faibles densités.

La seconde catégorie de procédés d'adressage, que l'on peut qualifier de procédés d'adressage mécanique qu'ils soient ex situ ou in situ, est représentée par de nombreux procédés, actuellement commercialisés, dans lesquels des micropipettes robotisées, assemblées en matrice et actionnées, par exemple, pneumatiquement, viennent prélever les constituants - généralement, une solution contenant des fragments d'ADN ou des oligonucléotides - et les déposent sous forme de doses précises, par exemple de microgouttes dans les tubes à essais ou sur des supports miniaturisés. On utilise, en général, des lames de verre comme support, ou des supports structurés portant des micropuits gravés dans le matériau. On peut aussi déposer successivement chacune des bases (A, G, C, T) dans l'ordre voulu sur la lame de verre.

Ces techniques classiques sont couramment utilisées en matrices de 96 points et peuvent encore atteindre des densités plus élevées. L'objectif serait d'atteindre, avec ces procédés mécaniques, 10 000 points, et plus, car le nombre de tests à réaliser en parallèle est considérable. Le nombre de plots peut atteindre aujourd'hui 8000 sur une même plaque.

La réalisation des matrices de microréservoirs est un problème simple, aisément résolu par les technologies microélectroniques. On peut réaliser :
- des substrats simples comportant des matrices micro usinées par voie chimique ou plasma. Des densités de l'ordre de 10 000 points/cm² sont courantes, mais des densités de 100 000 points/cm² sont accessibles ;
- des substrats instrumentés par des systèmes électroniques ou électromécaniques bien illustrés par la puce MICAM commercialisée par la société CisBio®. C'est le procédé (ex situ) illustré ci-dessus dans le premier cas.

Le problème le plus difficile est, en fait, de venir déposer les réactifs, sondes ou autres, spécifiquement dans chaque microréservoir. Plusieurs techniques sont utilisées pour le pipetage : dépôt par contact capillaire « pin and ring » ; « jet d'encre » piézoélectrique continu dévié, ou « goutte à la demande », ou encore jet d'encre thermique.

La technique des têtes d'imprimantes à jet d'encre thermique est très répandue et d'une grande fiabilité.

De manière générale, une tête d'imprimante à jet d'encre thermique, jouant, par exemple, le rôle de microinjecteur doseur thermique, répond au principe de fonctionnement décrit ci-dessous.

Le liquide à éjecter est confiné dans un réservoir.

Une résistance chauffante permet d'élever très localement la température dans le réservoir et de vaporiser le liquide au contact de la zone chauffante. La bulle de gaz, ainsi formée, crée une surpression qui éjecte une goutte à l'extérieur du réservoir.

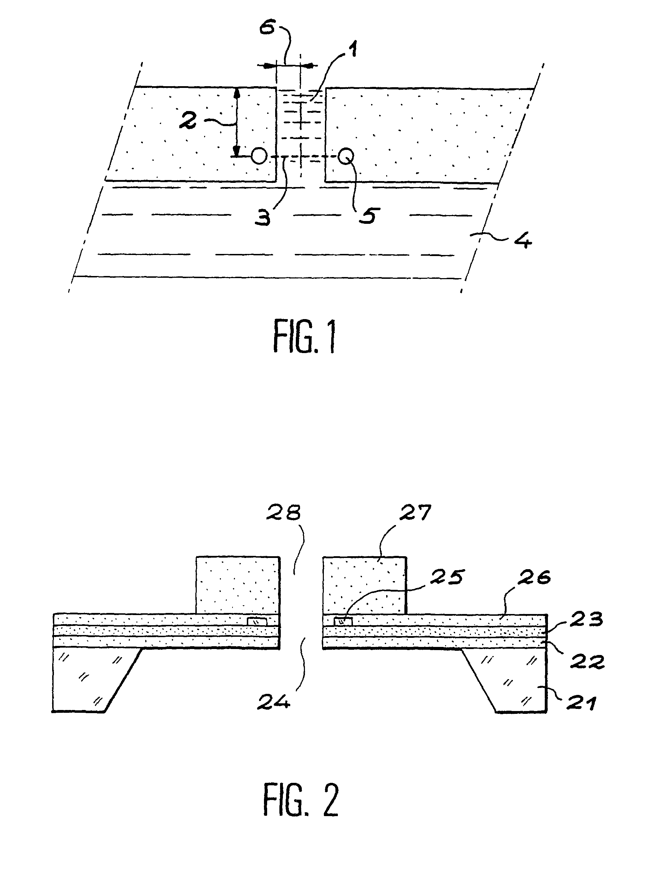

La figure 1 réalise idéalement cette fonction.

Sous l'effet de la pression et des forces de capillarité, la buse (1) de rayon r (6) se remplit de liquide, en provenance d'un réservoir (4). La buse est entourée à une profondeur L (2) d'un système d'apport calorifique, par exemple une résistance chauffante (5) fonctionnant par effet Joule.

Sous l'effet de l'élévation de température au niveau (3) et de la vaporisation des espèces volatiles du liquide, la partie supérieure du liquide est éjectée en formant une goutte de dimension v = π²L, où r est le rayon (6) de la buse (1) et L la hauteur de la colonne liquide correspondant à la profondeur (2).

Le fonctionnement est réalisable en continu : il permet la réalisation d'une succession de gouttes. Il fonctionne aussi au coup par coup. Le contrôle du rayon interne de la buse et de sa hauteur L permet de réaliser des gouttes de l'ordre du picolitre avec des densités d'injections de 10⁵ à 10²/cm². La densité des trous est importante parce qu'il n'y a pas interaction thermique d'un trou à l'autre.

Il existe trois types principaux de dispositif de tête d'imprimante à jet d'encre thermique qui mettent en application le principe décrit plus haut et illustré sur la figure 1.

Le premier de ces dispositifs est le dispositif dit « EDGESHOOTER » dans lequel deux substrats, un de silicium supportant l'élément chauffant, et un de verre, sont associés par l'intermédiaire d'un film collant et structurés par photolithographie. L'éjection des gouttes se fait latéralement, sur la tranche du dispositif.

Le deuxième dispositif est le dispositif, dit « SIDESHOOTER » dont la structure comporte, de façon analogue au dispositif précédent, un substrat silicium et un film collant, mais qui sont recouverts d'une plaque métallique sur laquelle sont réalisées les buses. L'éjection des gouttes se fait en regard de l'élément chauffant.

Le troisième dispositif est le dispositif, dit « BACKSHOOTER », dans lequel la tête d'impression est faite à partir de substrats de silicium orientés <110>.

Les canaux, amenant l'encre, sont réalisés par gravure anisotropique d'un côté du substrat, alors que sur l'autre côté, sont déposés les films minces qui permettront la réalisation de la membrane supportant l'élément chauffant et de l'électronique. Les buses sont localisées au centre de la membrane et les éléments chauffants sont placés de part et d'autre de celle-ci. Les résolutions atteignent de 300 dpi (dot per inch) et 600 dpi.

Dans tous les cas, c'est-à-dire pour les trois dispositifs, la tête d'impression est constituée d'une seule ligne comprenant seulement une cinquantaine de buses de 20 µm X 30 µm environ. La vitesse des gouttes à l'éjection varie de 10 à 15 m/s.

De tels dispositifs sont décrits, par exemple, dans les documents PCT/DE 91/00364, EP-A-0 530 209, DE-A-42 14 554, DE-A-42 14555 et DE-A-42 14556.

Tous ces dispositifs de tête d'imprimante à jet d'encre thermique, en particulier dans leur application, comme tête à microinjecteur doseur thermique, ont en commun l'inconvénient majeur de présenter des pertes thermiques importantes.

De ce fait, il n'est possible de réaliser que des têtes pourvues d'une seule et unique ligne de trous et non d'une matrice. Les densités et résolutions sont donc nettement insuffisantes.

Il existe donc un besoin pour une tête d'injection et de dosage comprenant un dispositif d'injection et de dosage thermique qui ne présente pas, entre autres, cet inconvénient majeur.

Il existe, en outre, un besoin pour une tête d'injection et de dosage qui permette d'atteindre des densités et résolutions au moins équivalentes à celles obtenues dans les systèmes d'adressage ou de synthèse in situ, tels que celui d'AFFIMETRIX®, sans en présenter, de même, les inconvénients. Aucun système d'adressage mécanique ne permet, en effet, à l'heure actuelle d'obtenir ces densités et résolutions.

Le but de la présente invention est de fournir une tête d'injection et de dosage à dispositif d'injection et de dosage thermique qui réponde, entre autres, à l'ensemble des besoins indiqués ci-dessus.

Le but de la présente invention est, en outre, de fournir une tête d'injection et de dosage thermique qui ne présente pas les inconvénients, limitations, défauts et désavantages des têtes d'injection et de dosage de l'art antérieur et qui résolve les problèmes posés par les têtes d'injection et de dosage de l'art antérieur.

Ce but, et d'autres encore, sont atteints, conformément à l'invention par une tête d'injection et de dosage comprenant au moins un dispositif d'injection et de dosage thermique pour fournir une quantité déterminée de liquide, ledit dispositif comprenant :
- un substrat plan évidé formant réservoir de liquide et recouvert, dans l'ordre, d'une membrane isolante diélectrique non contrainte de résistance thermique élevée, puis d'une couche semi-conductrice gravée formant résistance chauffante ;
- ladite membrane et ladite couche semi-conductrice étant traversées par un orifice en communication fluidique avec ledit réservoir de liquide ;
- une couche de résine photolithographiée en forme de buse sur ladite membrane, le canal de ladite buse se situant dans le prolongement dudit orifice et le volume dudit canal permettant de contrôler la quantité de liquide à fournir.

Selon l'invention, le chauffage est réalisé sur une membrane isolante diélectrique, de résistance thermique élevée et non contrainte, de ce fait, les pertes thermiques sont fortement réduites et, en conséquence, il sera ainsi possible de réaliser une tête comprenant une matrice bidimensionnelle de buses ou trous et non plus seulement une simple ligne ou rangée.

En d'autres termes, la structure du dispositif selon l'invention, comprenant trois couches sur le substrat, qui n'a jamais été mentionnée dans l'art antérieur permet, de manière surprenante et optimale, que la chaleur générée ne diffuse que très peu dans la membrane dont la résistance thermique est élevée, voire très élevée. C'est là un des inconvénients majeurs des dispositifs analogues de l'art antérieur, à savoir les pertes thermiques élevées, qui est éliminé. En effet, les dispositifs d'injection-dosage d'une tête peuvent être rapprochés et présenter une densité nettement plus importante que dans l'art antérieur. Les têtes selon l'invention peuvent ainsi porter des matrices bidimensionnelles de buses ou trous d'injection-dosage à forte densité, par exemple 10⁴/cm².

En outre, dans le dispositif de l'invention, le volume à délivrer, à fournir, est facilement, et avec grande précision, déterminé par le volume du canal de la buse qui est réalisé aisément en résine photolithographiée.

La tête selon l'invention permet de fournir avec une grande fiabilité des quantités parfaitement définies de liquide en des points parfaitement définis avec une densité, par exemple, de 10⁴ à 10⁵/cm², jamais atteinte jusqu'alors avec des dispositifs mécaniques du type à micropipettes thermiques.

La quantité déterminée de liquide à fournir à délivrer par le dispositif est généralement de 1 à quelques nl jusqu'à 100 µl ; c'est la raison pour laquelle on utilise généralement le terme « micropipette ».

Le substrat est généralement en silicium monocristallin, éventuellement dopé.

Avantageusement, selon l'invention, la membrane isolante diélectrique non contrainte de résistance thermique élevée est constituée d'un empilement de deux couches dont les épaisseurs sont telles que la contrainte (thermo)mécanique de l'empilement est nulle.

La membrane pourra être ainsi constituée par l'empilement dans l'ordre d'une première couche de SiO₂ sur le substrat, puis d'une seconde couche de SiNₓ avec de préférence x = 1,2.

La couche semi-conductrice pourra être, par exemple, en polysilicium ou silicium polycristallin dopé. L'élément dopant pourra être avantageusement du phosphore.

Il est possible, en outre, de prévoir une couche chimiquement et thermiquement isolante entre la couche semi-conductrice gravée formant résistance chauffante et la couche de résine photolithographiée en forme de buse.

Avantageusement, la tête selon l'invention comprend plusieurs desdits dispositifs d'injection et de dosage thermique.

De préférence, cela étant rendu possible par la structure du dispositif selon l'invention, lesdits dispositifs et, par voie de conséquence, les trous ou buses sont disposés sous la forme d'une matrice bidimensionnelle.

Lorsque la tête comprend plusieurs dispositifs d'injection et de dosage thermique, ces dispositifs peuvent être par exemple au nombre de 10² à 10⁵ pour une surface de la tête de 10 mm² à 1,5 cm².

Avantageusement, la tête selon l'invention est formée intégralement à partir d'un seul substrat ; d'une seule membrane isolante, couche semi-conductrice et couche de résine photolithographiée.

L'invention concerne également un procédé de fabrication d'une tête d'injection et de dosage selon la revendication 1, dans lequel on effectue les étapes successives suivantes :
- on réalise sur les deux faces d'un substrat plan une couche ou membrane isolante diélectrique non contrainte de résistance thermique élevée ;
- on dépose sur les couches isolantes diélectriques une couche semi-conductrice ;
- on réalise un motif de résine photosensible sur la couche semi-conductrice située sur la face supérieure du substrat, puis on élimine, par gravure, les zones de la couche semi-conductrice non protégée par la résine, on obtient ainsi un motif de résistance chauffante ;
- on réalise éventuellement une couche chimiquement et thermiquement isolante sur la face supérieure du substrat ;
- on réalise un orifice dans la couche semi-conductrice, dans la couche isolante diélectrique non contrainte de résistance thermique élevée sur la face supérieure du substrat, et éventuellement dans la couche chimiquement et thermiquement isolante ;
- on dépose une couche épaisse de résine photosensible sur la face supérieure du substrat et on la photolithographie pour réaliser une buse dans le prolongement de l'orifice ;
- on réalise des ouvertures dans la couche isolante diélectrique sur la face arrière du substrat ;
- on grave les zones de la face arrière du substrat non protégées par la couche isolante diélectrique, de manière à créer un réservoir pour le liquide à éjecter et à libérer la membrane.

Le substrat pourra être en silicium monocristallin, éventuellement dopé.

Avantageusement, la membrane isolante diélectrique est réalisée en déposant successivement sur le substrat deux couches formant un empilement, les épaisseurs des deux couches étant telles que la contrainte (thermo) mécanique de l'empilement soit nulle.

La première couche peut être une couche de SiO₂ et la seconde couche une couche de SiNₓ.

La couche semi-conductrice est généralement en polysilicium ou silicium polycristallin dopé, de préférence, par du phosphore.

Les zones de la couche semi-conductrice, non protégées par la résine photosensible, sont éliminées, de préférence, par un procédé de gravure plasma.

Le motif de résistance chauffante a généralement la forme d'un carré entourant la tête d'éjection mais peut avoir toute géométrie permettant un élévement localisé mais suffisant de température.

La couche chimiquement et thermiquement isolante est généralement une couche d'oxyde de silicium, du type « spin on glass » SOG.

L'orifice ou trou dans la couche chimiquement et thermiquement isolante éventuelle, dans la couche semi-conductrice et dans la couche isolante diélectrique peut être réalisé par un procédé de gravure chimique et/ou de gravure plasma selon la couche.

Les ouvertures de la couche isolante diélectrique sur la face arrière du substrat sont réalisées, de préférence, par photolithographie.

Les zones non protégées de la face arrière du substrat sont généralement gravées par un procédé chimique, mais peuvent être gravées par plasma.

L'invention concerne enfin un système de fonctionnalisation ou d'adressage, notamment de microréacteurs chimiques ou biochimiques comprenant la tête d'injection et de dosage, décrite plus haut.

Dans de tels systèmes, le liquide dosé, injecté, est, par exemple, une solution de réactifs tels que les phosphoramidites, etc...

Un tel système selon l'invention surmonte les difficultés mentionnées plus haut pour de tels systèmes qu'ils soient du type « in situ » ou « ex situ ».

En particulier, les systèmes selon l'invention dans lesquels les têtes comprennent des matrices de dispositif d'injection et donc de buses présentent les avantages suivants :
- possibilité de fonctionnaliser en parallèle un grand nombre d'unités d'hybridation de petites dimensions (< 100 µm x 100 µm) ;
- utilisation de la voie chimique et donc amélioration des rendements de synthèse ;
- flexibilité du dispositif qui permet de réaliser les séquences désirées à la demande, sans problème de seuil de rentabilité ;
- faible coût.

A l'heure actuelle, l'utilisation des biopuces se limite à quelques grosses entreprises. Le système selon l'invention permet d'ouvrir cette utilisation à tous les clients potentiels.

Les têtes et systèmes selon l'invention peuvent, outre la génomique ou les biopuces, trouver ainsi leur application dans la chimie combinatoire ou la formulation pharmaceutique.

L'invention va maintenant être décrite, de manière détaillée, dans la description, qui va suivre, donnée à titre illustratif et non limitatif, faite en référence aux dessins joints, dans lesquels :
- la figure 1 est une vue en coupe schématique d'un dispositif théorique idéal de microinjecteur doseur thermique ;
- la figure 2 est une vue en coupe schématique d'un microinjecteur doseur thermique selon l'invention ; et
- les figures 3 à 12 sont des vues en coupe schématique qui illustrent les différentes étapes du procédé selon l'invention.

La structure du microinjecteur doseur thermique de la figure 2 comprend, tout d'abord, un support (11) de silicium monocristallin, de préférence, il s'agit de silicium monocristallin dopé par un élément, tel que la gravure chimique du silicium, en particulier, dans les solutions basiques, soit possible.
L'élément dopant pourra donc être choisi, par exemple, parmi le bore et le phosphore.

Sur le support se trouve une membrane constituée d'une première couche isolante de SiO₂ (22) et d'une seconde couche de SiNₓ (23) avec x = 1,2. Les épaisseurs relatives de chacune de ces couches isolantes sont contrôlées de façon à ce qu'il n'y ait peu, de préférence pas, de contrainte mécanique résiduelle avec le support de silicium monocristallin.

En outre, l'épaisseur de la couche de SiNₓ est, de préférence, telle que la contrainte mécanique résiduelle résultant de l'empilement de ces deux couches soit théoriquement nulle. L'épaisseur de la couche de SiO₂ est généralement de 0, 8 à 1, 6 µm, tandis que l'épaisseur de la couche de SiNₓ est généralement de 0,2 à 0,9 µm.

Dans cette membrane est pratiqué un trou (24) de petites dimensions. Ce trou est généralement circulaire, avec un diamètre, par exemple, de 5 à 50 microns.

La membrane supporte une résistance chauffante intégrée (25), réalisée généralement en silicium polycristallin fortement dopé, de façon à atteindre une résistivité électrique aussi faible que possible.
L'élément dopant de ce silicium polycristallin sera choisi, par exemple, parmi le phosphore, le bore, à une teneur de 10¹⁹ à 10²⁰ at/cm³.

Une telle résistance chauffante peut chauffer localement jusqu'à des températures élevées pouvant atteindre plusieurs centaines de degrés, par exemple de 40 à 500°C.

La résistance chauffante est isolée thermiquement et chimiquement, de préférence, par une couche d'oxyde de silicium (26), par exemple, une couche d'oxyde de silicium, du type « spin on glass » (déposé par rotation).

Une buse est rapportée sur la couche d'oxyde de silicium isolante, cette buse (27) est généralement réalisée, du fait du procédé de fabrication utilisé, en une résine photosensible, telle que la résine SV8 (CIPEC®).

Le canal (28) la buse (27) prolonge le trou réalisé dans la membrane et la couche isolante, par exemple, d'oxyde de silicium.

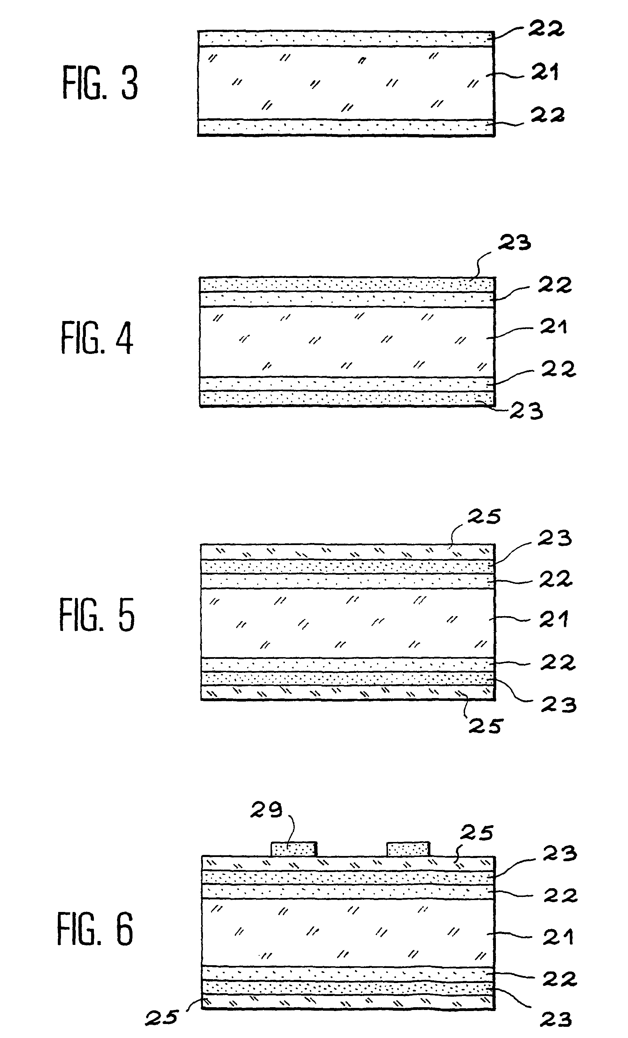

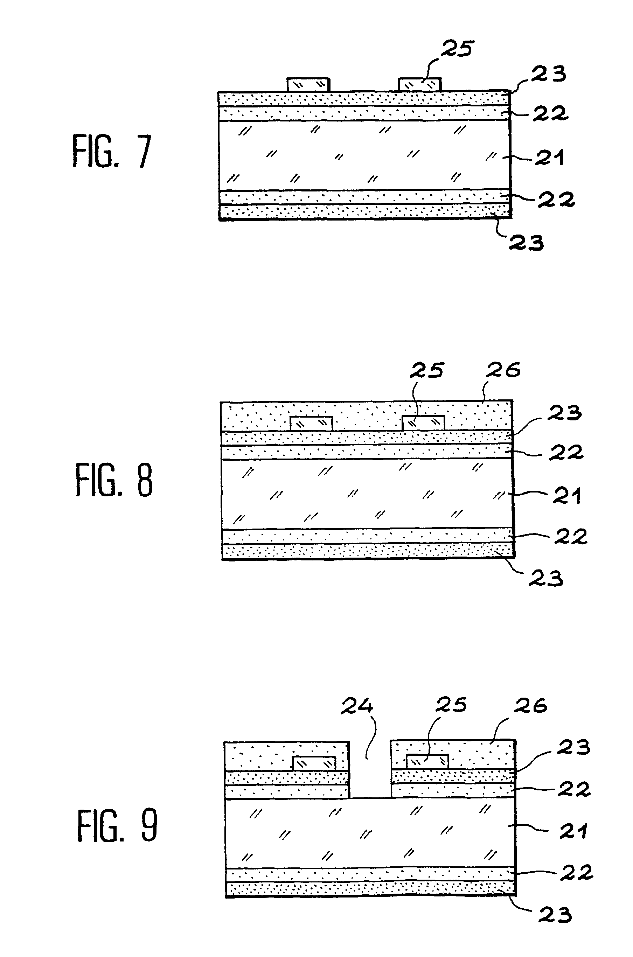

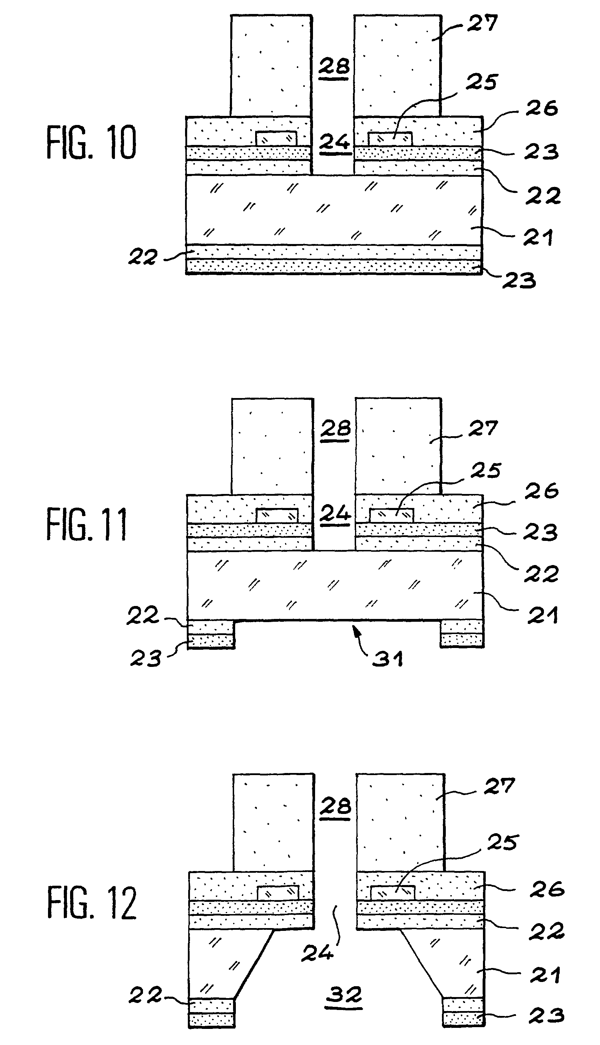

Le procédé de fabrication, selon l'invention, comporte les étapes suivantes, qui sont illustrées sur les figures 3 à 12 :
1. Le substrat ou support de buse (21) est une plaquette de silicium polie double face, qui a, par exemple, une épaisseur de 350 à 500 µm et dont les dimensions sont de 10 à 15 cm. Les dimensions de la plaquette permettent de réaliser de 50 à 1000 microinjecteurs doseurs thermiques. Comme on l'a déjà indiqué plus haut, il s'agit d'un support en silicium monocristallin, de préférence dopé par un élément, tel que la gravure chimique du silicium dopé, en particulier, dans des solutions basiques de type KOH ou TMAH soit possible. L'élément dopant pourra donc être choisi parmi le bore, ou le phosphore à une teneur, par exemple, de 10¹⁶ à 10¹⁸ at/cm³.
2. On réalise, sur les deux faces de la plaquette, une couche d'oxyde de silicium (22) d'une épaisseur, par exemple, de 0,8 à 1,6 µm (figure 3) .
   La couche d'oxyde (22) est obtenue par oxydation directe au silicium généralement à une température de 1150°C.
3. Une couche de SiNₓ (23) est ensuite déposée sur les deux faces de la plaquette (figure 4). Dans la formule SiNₓ, x représente un nombre réel x = 1,2. L'épaisseur de cette couche est telle que la contrainte mécanique résiduelle résultant de l'empilement de la couche de SiO₂ et de la couche de SiNₓ soit théoriquement nulle. Ainsi, l'épaisseur de la couche de SiNₓ est elle généralement de 0,2 à 0,9 µm.
   Le dépôt est généralement réalisé par une technique de dépôt en phase vapeur.
   Les couches de SiO₂ et SiNₓ, présentes sur la face arrière de la plaquette de silicium, serviront en fin de procédé de fabrication de couches de masquage, lors de la gravure chimique pour la libération de la membrane.
4. Une couche de polysilicium ou silicium polycristallin (25) est ensuite déposée de même sur les deux faces de la plaquette (figure 5). L'épaisseur de cette couche est généralement de 0,5 à 1,5 µm. Le dépôt est généralement réalisé par une technique de dépôt en phase vapeur.
   Cette couche (25) est ensuite dopée, par exemple, par diffusion du phosphore de façon à atteindre une résistivité électrique aussi faible que possible. La teneur en dopant, tel que le phosphore, de la couche de polysilicium (25) sera donc généralement de 10¹⁹ à 10²⁰ at/cm³. L'opération de dopage par diffusion est généralement réalisée dans les conditions suivantes : T = 950°C pendant 25 mn.
5. La couche de polysilicium déposée lors de l'étape 4 est recouverte d'une résine photosensible (29) selon un motif carré et sur une épaisseur, par exemple, de 1 à 3 µm. Cette résine photosensible est choisie, par exemple, parmi les résines CLARIANT.
   Le dépôt de la résine photosensible (29) se fait généralement par une technique de dépôt par centrifugation.
   La résine photosensible (29) est gravée sélectivement par une technique de photolithographie. Les zones de polysilicium, non protégées par la résine, sont éliminées par gravure plasma.
   Le motif ainsi formé permet de réaliser une résistance chauffante sensiblement en forme d'anneau (figures 6 et 7).
6. La résistance de polysilicium est recouverte, par exemple, d'une couche d'oxyde de silicium, du type « spin on glass », (26) d'une épaisseur généralement de 100 à 200 nm, afin d'être protégée électriquement et chimiquement du milieu extérieur (figure 8).
7. Un trou (24), qui constituera l'orifice d'éjection, est réalisé au centre de la résistance chauffante par gravure chimique, par exemple, dans une solution de HF de l'oxyde de silicium (« spin on glass »), puis gravure plasma du SiNₓ et à nouveau gravure chimique par HF de la couche d'oxyde de silicium (figure 9).
   Ce trou (24) a généralement une forme circulaire avec un diamètre de 5 à 50 µm.
8. Une couche épaisse de résine photosensible (27) est basée sur la couche d'oxyde de silicium « spin on glass » (26). Par couche épaisse, on entend généralement une épaisseur de 1 µm à 100 µm.
   La résine photosensible est généralement de la résine SV8 de CITEC® et la technique de dépôt est un dépôt par centrifugation.
   Suite au dépôt, la couche de résine est photolithographiée, afin de réaliser les canaux (28) des buses entourant le trou ou orifice d'injection (figure 10).
9. Des ouvertures (31) sont réalisées dans les couches de SiO₂ et SiNₓ, présentes sur la face arrière, par un procédé de photolithographie, déjà présenté plus haut (figure 11).
10. La gravure chimique, par exemple, dans une solution de KOH ou TMAH des zones non protégées par la double couche SiO2/SiNx permet, d'une part, de creuser dans le substrat de silicium le réservoir (32), qui retiendra le liquide à injecter et, d'autre part, de libérer la membrane supportant le dispositif chauffant et la buse d'éjection (figure 12).

## Revendications

1. Tête d'injection et de dosage comprenant au moins un dispositif d'injection et de dosage thermique pour fournir une quantité déterminée de liquide, ledit dispositif comprenant :
- un substrat plan évidé (21) formant réservoir de liquide et recouvert, dans l'ordre, d'une membrane isolante diélectrique (22, 23) non contrainte de résistance thermique élevée, puis d'une couche semi-conductrice gravée formant résistance chauffante (25) ;
- ladite membrane et ladite couche semi-conductrice étant traversées par un orifice (24) en communication fluidique avec ledit réservoir de liquide ;
- une couche de résine photolithographiée en forme de buse (27) sur ladite membrane, le canal (28) de ladite buse se situant dans le prolongement dudit orifice et le volume dudit canal permettant de contrôler la quantité déterminée de liquide à fournir.

2. Tête d'injection et de dosage selon la revendication 1, dans laquelle la quantité déterminée de liquide est de 1 nl à 100 µl.

3. Tête selon l'une quelconque des revendications 1 et 2, dans laquelle le substrat est en silicium monocristallin, éventuellement dopé.

4. Tête selon l'une quelconque des revendications 1 et 2, dans laquelle la membrane isolante diélectrique non contrainte de résistance thermique élevée est constituée d'un empilement de deux couches dont les épaisseurs sont telles que la contrainte (thermo)mécanique de l'empilement est nulle.

5. Tête selon la revendication 4, dans laquelle la membrane est constituée par l'empilement dans l'ordre d'une première couche de SiO₂ sur le substrat, puis d'une seconde couche de SiNₓ avec de préférence x = 1,2.

6. Tête selon l'une quelconque des revendications 1 à 5, dans laquelle la couche semi-conductrice est en polysilicium ou silicium polycristallin dopé.

7. Tête selon la revendication 6, dans laquelle le polysilicium ou silicium polycristallin est dopé par du phosphore.

8. Tête selon l'une quelconque des revendications 1 à 7, dans laquelle une couche chimiquement et thermiquement isolante est, en outre, prévue entre la couche semi-conductrice gravée et la couche de résine photolithographiée en forme de buse.

9. Tête selon l'une quelconque des revendications 1 à 8, comprenant plusieurs des dispositifs d'injection et de dosage thermique.

10. Tête selon la revendication 9, dans lequel lesdits dispositifs sont disposés sous la forme d'une matrice bidimensionnelle.

11. Tête selon l'une quelconque des revendications 9 et 10, comprenant 10² à 10⁵ dispositifs d'injection.

12. Tête selon l'une quelconque des revendications 9 à 11, dans laquelle la tête est formée intégralement à partir d'un seul substrat ; d'une seule membrane isolante, couche semi-conductrice, couche chimiquement et thermiquement isolante éventuelle, et couche de résine photolithographiée.

13. Procédé de fabrication d'une tête d'injection et de dosage selon la revendication 1, dans lequel on effectue les étapes successives suivantes :
- on réalise sur les deux faces d'un substrat plan une couche ou membrane isolante diélectrique non contrainte de résistance thermique élevée ;
- on dépose sur les couches isolantes diélectriques une couche semi-conductrice ;
- on réalise un motif de résine photosensible sur la couche semi-conductrice située sur la face supérieure du substrat, puis on élimine, par gravure, les zones de la couche semi-conductrice non protégée par la résine, on obtient ainsi un motif de résistance chauffante ;
- on réalise éventuellement une couche chimiquement et thermiquement isolante sur la face supérieure du substrat ;
- on réalise un orifice dans la couche semi-conductrice, dans la couche isolante diélectrique non contrainte de résistance thermique élevée sur la face supérieure du substrat, et éventuellement dans la couche chimiquement et thermiquement isolante ;
- on dépose une couche épaisse de résine photosensible sur la face supérieure du substrat et on la photolithographie pour réaliser une buse dans le prolongement de l'orifice ;
- on réalise des ouvertures dans la couche isolante diélectrique sur la face arrière du substrat ;
- on grave les zones de la face arrière du substrat non protégées par la couche isolante diélectrique, de manière à créer un réservoir pour le liquide à éjecter et à libérer la membrane.

14. Procédé selon la revendication 13, dans lequel le substrat est en silicium monocristallin, éventuellement dopé.

15. Procédé selon la revendication 13, dans lequel la membrane isolante diélectrique est réalisée en déposant successivement sur le substrat deux couches formant un empilement, les épaisseurs des deux couches étant telles que la contrainte (thermo)mécanique de l'empilement soit nulle.

16. Procédé selon la revendication 15, dans lequel la première couche de l'empilement est une couche de SiO₂ et la seconde couche est une couche de SiNₓ.

17. Procédé selon la revendication 13, dans lequel la couche semi-conductrice est en polysilicium ou silicium polycristallin dopé.

18. Procédé selon la revendication 13, dans lequel les zones de la couche semi-conductrice, non protégées par la résine photosensible, sont éliminées, par un procédé de gravure plasma.

19. Procédé selon la revendication 13, dans lequel l'orifice dans la couche chimiquement et thermiquement isolante éventuelle, dans la couche semi-conductrice et dans la couche isolante diélectrique, est réalisé par un procédé de gravure chimique et/ou de gravure plasma selon la couche.

20. Procédé selon la revendication 13, dans lequel les ouvertures de la couche isolante diélectrique sur la face arrière du substrat sont réalisées par photolithographie.

21. Procédé selon la revendication 13, dans lequel les zones non protégées de la face arrière du substrat sont gravées par un procédé chimique.

22. Système de fonctionnalisation ou d'adressage, notamment de microréacteurs chimiques ou biochimiques, comprenant la tête d'injection et de dosage selon l'une quelconque des revendications 1 à 12.

23. Utilisation de la tête selon l'une quelconque des revendications 1 à 12 ou du système selon la revendication 22, dans les techniques mettant en oeuvre des biopuces, la génomique, la chimie combinatoire, ou la formulation pharmaceutique.

## Patentansprüche

1. Einspritz- und Dosierungskopf mit mindestens einer thermischen Einspritz- und Dosierungsvorrichtung zum Liefern einer bestimmten Flüssigkeitsmenge, wobei die Vorrichtung umfaßt:
- ein planes ausgehöhltes Substrat (21), das einen Flüssigkeitsbehälter bildet und in dieser Reihenfolge mit einer isolierenden dielektrischen Membran (22,23) die keiner hohen Wärmebeanspruchung unterliegt, und mit einer geätzten Halbleiterschicht, welche einen Heizwiderstand. (25) bildet, bedeckt ist,
- wobei die Membran.und die Halbleiterschicht von einer Öffnung (24) durchsetzt sind, die in Fluidverbindung mit dem Flüssigkeitsbehälter steht,
eine photolithographische Harzschicht in Form einer Düse (27) auf der Membran, wobei der Kanal (28) der Düse sich in der Verlängerung der Öffnung befindet und das Volumen des Kanals eine Steuerung der bestimmten zu liefernden Flüssigkeitsmenge gestattet.

2. Einspritz- und Dosierungskopf nach Anspruch l, wobei die bestimmte Flüssigkeitsmenge von 1 nl bis 100 µl beträgt.

3. Einspritz- und Dosierungskopf nach einem der Ansprüche 1 oder 2, wobei das Substrat aus eventuell dotiertem monokristallinem Silicium besteht.

4. Einspritz- und Dosierungskopf nach einem der Ansprüche 1 oder 2, wobei die isolierende dielektrische Membran, die keiner hohen Wärmebeanspruchung unterliegt, aus einer Schichtung zweier Schichten gebildet ist, deren Dicken derart sind, dass die (thermo) mechanische Beanspruchung der Schichtung Null ist.

5. Kopf nach Anspruch 4, wobei die Membran durch die Schichtung in der Reihenfolge einer ersten Schicht aus SiO₂ auf dem Substrat und dann einer zweiten Schicht aus SiNₓ, mit vorzugsweise x = 1,2, gebildet ist.

6. Kopf nach einem der Ansprüche 1 bis 5, wobei die Halbleiterschicht aus Polysilicium oder dotiertem: polykristallinem Silicium ist.

7. Kopf nach Anspruch 6, wobei das Polysilicium oder polykristalline Silicium mit Phosphor dotiert ist.

8. Kopf nach einem der Ansprüche 1 bis 7, wobei außerdem eine chemisch und thermisch isolierende Schicht zwischen der geätzten Halbleiterschicht und der photolithographischen Harzschicht in Düsenform vorgesehen ist.

9. Kopf nach einem der Ansprüche 1 bis 8, mit mehreren thermischen Einspritz- und Dosierungsvorrichtungen.

10. Kopf nach Anspruch 9, wobei die Vorrichtungen in Form einer zweidimensionalen Matrix angeordnet sind.

11. Kopf nach einem der Ansprüche 9 oder 10, mit 10² bis 10⁵ Einspritzvorrichtungen.

12. Kopf nach einem der Ansprüche 9 bis 11, wobei der Kopf integral aus einem einzigen Substrat, einer einzigen isolierenden Membran, einer Halbleiterschicht, einer chemisch oder eventuell thermisch isolierenden Schicht und einer photolithographischen Schicht gebildet ist.

13. Verfahren zur Herstellung eines Einspritz- und Dosierungskopfs nach Anspruch 1, bei dem die folgenden sukzessiven Schritte ausgeführt werden:
- Herstellung einer Schicht oder dielektrischen isolierenden Membran, die keiner hohen Wärmebeanspruchung unterliegt, auf den beiden Flächen eines planen Substrats,
- Aufbringen einer Halbleiterschicht auf die isolierenden dielektrischen Schichten,
- Herstellen einer lichtempfindlichen Harzstruktur auf der an der Oberseite des Substrats befindlichen Halbleiterschicht, und anschließendes Eliminieren der von dem Harz nicht geschützten Zonen der Halbleiterschicht durch Ätzen, wodurch man eine Heizwiderstandstruktur erhält,
- eventuelles Herstellen einer chemischen und thermisch isolierenden Schicht auf der Oberseite des Substrats,
- Einbringen einer Öffnung in die Halbleiterschicht, in die isolierende dielektrische Schicht, die keiner hohen Wärmebeanspruchung unterliegt, an der Oberseite des Substrats, und eventuell in die chemisch und thermisch isolierende Schicht,
- Aufbringen einer dicken lichtempfindlichen Harzschicht auf die Oberseite des Substrats, und photolithographische Behandlung, um eine Düse in der Verlängerung der Öffnung herzustellen,
- Einbringen von Öffnungen in die dielektrische isolierende Schicht auf der Rückseite des Substrats,
- Ätzen der nicht von der dielektrischen isolierenden Schicht geschützten Zonen der Rückseite des Substrats derart, dass ein Behälter für die auszustoßende Flüssigkeit erzeugt und die Membran freigelegt wird.

14. Verfahren nach Anspruch 13, wobei das Substrat aus monokristallinem, eventuell dotiertem Silicium besteht.

15. Verfahren nach Anspruch 13, wobei die isolierende dielektrische Membran durch sukzessives Aufbringen zweier eine Schichtung bildenden Schichten auf das Substrat hergestellt wird, wobei die Dicken der beiden Schichten derart sind, dass die (thermo)mechanische Beanspruchung der Schichtung Null ist.

16. Verfahren nach Anspruch 15, wobei die erste Schicht der Schichtung eine SiO₂-Schicht und die zweite Schicht eine SiNₓ-Schicht ist.

17. Verfahren nach Anspruch 13, wobei die Halbleiterschicht aus Polysilicium oder polykristallinem dotiertem Silicium besteht.

18. Verfahren nach Anspruch 13, wobei die Zonen der Halbleiterschicht, die nicht von dem lichtempfindlichen Harz geschützt sind, durch ein Plasma-Ätzverfahren eliminiert werden.

19. Verfahren nach Anspruch 13, wobei die Öffnung in der eventuellen chemisch und thermisch isolierenden Schicht, in der Halbleiterschicht und in der isolierenden dielektrischen Schicht durch ein chemisches und/oder Plasma-Ätzverfahren je nach der Schicht hergestellt wird.

20. Verfahren nach Anspruch 13, wobei die Öffnungen der isolierenden dielektrischen Schicht auf der Rückseite des Substrats durch Photolithographie hergestellt werden.

21. Verfahren nach Anspruch 13, wobei die nicht geschützten Zonen der Rückseite des Substrats durch ein chemisches Verfahren geätzt werden.

22. System zur Funktionalisierung oder Adressierung insbesondere von chemischen oder biochemischen Mikroreaktoren mit dem Einspritz- und Dosierungskopf gemäß einem der Ansprüche 1 bis 12.

23. Anwendung des Kopfs gemäß einem der Ansprüche 1 bis 12 oder des Systems gemäß Anspruch 22 bei Techniken, die Biochips, die Gentechnik, die kombinatorische chemie oder die pharmazeutische Formulierung einsetzen.

## Claims

1. Injection and proportioning head comprising at least one thermal injection and proportioning device to supply a determined quantity of liquid, said device comprising:
- a hollowed out plane substrate (21) forming a liquid reservoir and covered, in order, by an unconstrained dielectric insulating membrane (22, 23) with a high thermal resistance, and then an etched semi conducting layer forming the heating resistance (25);
- an orifice (24) enabling fluid communication with said liquid reservoir passing through said membrane and said semi conducting layer;
- a photolithographed resin layer in the form of a nozzle (27) on said membrane, the duct (28) of said nozzle being in line with said orifice and the volume of said duct being such that the determined quantity of the liquid to be supplied can be controlled.

2. Injection and proportioning head according to claim 1, in which the determined quantity of liquid is 1 nl to 100 µl.

3. Head according to either of claims 1 and 2, in which the substrate is a monocrystalline silicon, that may or may not be doped.

4. Head according to either of claims 1 and 2, in which the unconstrained dielectric insulating membrane with a high thermal resistance is composed of a stack of two layers, the thicknesses of which are such that the (thermo)mechanical stress in the stack is zero.

5. Head according to claim 4, in which the membrane is composed of a stack comprising, in order, a first layer of SiO₂ on the substrate, followed by a second layer of SiNₓ, where x is preferably 1.2.

6. Head according to any one of claims 1 to 5, in which the semi conducting layer is made of doped polysilicon or polycrystalline silicon.

7. Head according to claim 6, in which the polysilicon or the polycrystalline silicon is doped by phosphorus.

8. Head according to any one of claims 1 to 7, in which a chemically and thermally insulating layer is also provided between the etched semi conducting layer and the photolithographed resin layer in the form of a nozzle.

9. Head according to any one of claims 1 to 8, comprising several thermal injection and proportioning devices.

10. Head according to claim 9, in which said devices are arranged in the form of a two-dimensional matrix.

11. Head according to either of claims 9 and 10, comprising 10² to 10⁵ injection devices.

12. Head according to any one of claims 9 to 11, in which the head is formed entirely from a single substrate; from a single insulating membrane, semi conducting layer, a chemically and thermally insulating layer if there is one, and a photolithographed resin layer.

13. Manufacturing process for an injection and proportioning head according to claim 1, in which the following steps are carried out in sequence:
- an unconstrained dielectric insulating layer or membrane with a high thermal resistance is made on the two faces of a plane substrate;
- a semi conducting layer is deposited on the dielectric insulating layers;
- a pattern of a photosensitive resin is made on a semi conducting layer located on the top face of the substrate, and then the areas of the unconstrained semi conducting layer not protected by resin are eliminated, thus making a heating resistance pattern;
- a chemically and thermally insulating layer may be made on the top face of the substrate;
- an orifice is made in the semi-conducting layer, in the unconstrained dielectric insulating layer with a high thermal resistance on the top face of the substrate, and possibly in the chemically and thermally insulating layer;
- a thick layer of photosensitive resin is deposited on the top face of the substrate and it is photolithographed to make a nozzle in line with the orifice;
- openings are made in the dielectric insulating layer on the back of the substrate;
- the areas of the back face of the substrate not protected by the dielectric insulating layer are etched, in order to create a reservoir for the liquid to be ejected and to release the membrane.

14. Process according to claim 13, in which the substrate is made of possibly doped monocrystalline silicon.

15. Process according to claim 13, in which the dielectric insulating membrane is made by successively depositing two layers on the substrate forming a stack, the thickness of the two layers being such that the (thermo)mechanical stress of the stack is zero.

16. Process according to claim 15, in which the first layer of the stack is an SiO₂ layer and the second layer is an SiNₓ layer.

17. Process according to claim 13, in which the semi conducting layer is made of doped polysilicon or polycrystalline silicon.

18. Process according to claim 13, in which the areas of the semi conducting layer not protected by the photosensitive resin are eliminated using a plasma etching process.

19. Process according to claim 13, in which the orifice in the chemically and thermally insulating layer, if any, in the semi conducting layer and in the dielectric insulating layer, is made using a chemical etching and/or plasma etching process, depending on the layer.

20. Process according to claim 13, in which the openings in the dielectric insulating layer on the back face of the substrate are made by photolithography.

21. Process according to claim 13, in which the unprotected areas on the back face of the substrate are etched by a chemical process.

22. Functionalisation or addressing system, particularly for chemical or biochemical micro reactors, comprising the injection and proportioning head according to any one of claims 1 to 12.

23. Use of the head according to any one of claims 1 to 12 or the system according to claim 22, in techniques involving biochips, genomics, combinational chemistry or pharmaceutical formulation.
